Europäisches Patentamt

European Patent Office

Office européen des brevets

(11) Veröffentlichungsnummer: **0 305 856**
**A2**

(12) # EUROPÄISCHE PATENTANMELDUNG

(21) Anmeldenummer: **88113672.5**

(22) Anmeldetag: **23.08.88**

(51) Int. Cl.⁴: **H02H 3/16**

(30) Priorität: **29.08.87 DE 3728906**

(43) Veröffentlichungstag der Anmeldung:
**08.03.89 Patentblatt 89/10**

(84) Benannte Vertragsstaaten:
**AT BE CH DE ES FR GB GR IT LI LU NL SE**

(71) Anmelder: **Asea Brown Boveri**
**Aktiengesellschaft**
**Kallstadter Strasse 1**
**D-6800 Mannheim-Käfertal(DE)**

(72) Erfinder: **Kinzel, Helmut**
**Lärchenweg 16**
**D-6940 Weinheim(DE)**

(74) Vertreter: **Rupprecht, Klaus, Dipl.-Ing. et al**
**c/o Asea Brown Boveri Aktiengesellschaft**
**Zentralbereich Patente Postfach 100351**
**D-6800 Mannheim 1(DE)**

(54) **Verfahren zur Erfassung eines zwischen einem Hin- und Rückleiter über den menschlichen Körper fliessenden Stromes und Schaltungsanordnung zur Durchführung des Verfahrens.**

(57) Ein Verfahren zur Erfassung eines zwischen einem Hinleiter und einem Rückleiter über den menschlichen Körper fließenden Stromes und zum Abschalten der Netzleiter, umfaßt die Schritte; das von einem in einem Netzleiter befindlichen Stromsensor abgegebene Ausgangssignal wird erfaßt und es wird dann lediglich bei einem Wert des Stromsensorsignales zwischen einem unteren und einem oberen Schwellwert ein Auslöser zur Abschaltung der Netzleiter betätigt wird.

Fig.1

## Verfahren zur Erfassung eines zwischen einem Hin- und Ruckleiter über den menschlichen Körper fließenden Stromes und Schaltungsanordnung zur Durchführung des Verfahrens

Die Erfindung betrifft ein Verfahren zur Erfassung eines zwischen einem Hin- und Rückleiter über den menschlischen Körper fließenden Stromes und zum Abschalten der Netzleiter sowie eine Schaltungsanordnung zur Durchführung des Verfahrens.

Die Absicherung von Netzen gegen Kurzschlüsse und Überströme erfolgt bekanntlich mittels Leitungsschutzschaltern, in denen neben einem Schaltschloß zur bleibenden Öffnung von Kontakten ein thermischer und ein elektromagnetischer Auslöser vorgesehen sind, von denen der thermische Auslöser bei einem sog. Überstrom und der elektromagnetische Auslöser bei einem Kurzschlußstrom anspricht. Mit diesen Leitungsschutzschaltern, die ähnlich wie Schmelzsicherungen bei Auftreten bestimmter Netzzustände abschalten, werden Gefährdungen von Sachen, z.B. Häusern und dgl., z.B. durch Abbrennen vermieden. Menschen oder Tiere können mit diesen Leitungsschutzschaltern gegen unmittelbare Einwirkung des Stromes nicht geschützt werden.

Wenn z.B. ein elektrisches Gerät einen sog. Masseschluß hat und an dessen elektrisch leitenden Außengehäuse Spannung anliegt und ein Mensch ein solches unter Spannung stehendes Gehause berührt, dann besteht, weil ein Strom durch den Menschen hindurch zur Erde abfließen kann, bei niedrigen Strömen die Gefahr von Muskelkrämpfen und bei hoheren Strömen von Herzkammerflimmern mit Todesfolge. Diese Fälle können mit Fehlerstromschutzschaltern gelöst werden. Die Wirkungsweise derartiger Fehlerstromschutzschalter ist so, daß die Netzleiter als Primärwicklungen durch einen Summenstromwandler hindurchgeführt werden; durch Abfließen eines Teiles des Netzstromes zur Erde wird das Gleichgewicht im Summenstromwandler geändert und an der Sekundärseite des Summenstromwandlers ein Signal erzeugt, das verarbeitet und zum Auslösen des Fehlerstromschutzschalters benutzt wird.

Der weitere Fall, daß eine Person, z.B. ein Kind, mit einer Hand einen Hin- oder Netzleiter und mit der anderen Hand den Rückleiter, der z.B. ein Mp-Leiter sein kann, anfaßt, wurde in der Vergangenheit im wesentlichen dadurch gelöst, daß Maßnahmen zur Erzielung eines Berührungsschutzes getroffen worden sind. Die besondere Gefahr, die darin besteht, daß kleine Kinder mit elektrisch leitenden Gegenständen in elektrische Geräte bzw. in offene Steckdosen hineingreifen und sich dabei einem Stromdurchfluß aussetzen, ist durch die entsprechenden Berührungsabdeckungsmaßnahmen kaum zu beseitigen. Selbst komplizierte Abdek-kungseinrichtungen innerhalb einer Steckdose können bei geschickter Handhabung überwunden werden.

Aufgabe der Erfindung ist es daher, ein Verfahren der eingangs genannten Art und eine Schaltungsanordnung zur Durchführung des Verfahrens anzugeben, mit dem bzw. mit der die bei Berührung eines Phasenleiters und des Mp-Leiters bestehende Lebensgefahr im wesentlichen beseitigt wird.

Diese Aufgabe wird erfindungsgemäß dadurch gelöst, daß das von einem in einem der Netzleiter befindlichen Stromsensor abgegebene Ausgangssignal erfaßt und lediglich bei einem Wert des Stromsensorsignales zwischen einem unteren und einem oberen Schwellwert ein Auslöser zur Abschaltung der Netzleiter betätigt wird.

In besonders vorteilhafter Weise entspricht gemäß Anspruch 2 der untere Schwellwert einem Körperstrom, der gerade noch keine Gefahr für den Menschen bewirkt, wogegen der obere Schwellwert dem bei Netzspannung maximal möglichen Körperstrom durch den Menschen entspricht. Nach der Sicherheitsschwelle IEC 64 (CO) 353 beträgt der untere Körperstrom 40 mA.

Die Erfindung macht sich dabei folgendes zunutze:

Bei realistischen Untersuchungen (s. Sonderdruck aus E und M, Heft 2/84, Prof. Biegelmeier: Über den zusätzlichen Schutz bei direktem Berühren durch Fehlerstromschutzschalter) betrug der maximal wirksame effektive Strom in Körperlängsrichtung 189 mA bei 200 V. Bei 220 V ergäbe sich dann - linear hochgerechnet - ein maximaler Strom von 208 mA, wenn man alle Netzüberspannungen und sonstige Einflüsse berücksichtigt, dann wird der Strom durch den menschlichen Körper bei 220 V aufgrund der Konstitution und des ohmschen Widerstandes des menschlichen Körpers 230 bis 250 mA kaum übersteigen. Wenn der Strom von der linken zur rechten Hand fließt, dann erhält man einen sog. Herzstromfaktor von 0,4; damit ist dieser Fall ungefährlicher; der Herzstromfaktor ist bei Längsdurchströmung 1,0, so daß von diesem ungünstigsten Fall für die Erfindung auszugehen ist.

Wenn man also davon ausgeht, daß bei 220 V Nennspannung ein Körperstrom zwischen 40 und 250 mA hervorgerufen werden kann, der für den Menschen lebensgefährlich ist, und wenn man davon ausgeht, daß kleinere Ströme ungefährlich und größere Ströme kaum fließen können, dann kann man sich dieses Fenster für die Erfindung zunutze machen. Immer dann, wenn eine Stromerhöhung zwischen 40 bis 250 mA detektiert wird, wird erfindungsgemäß abgeschaltet, da man dann davon auszugehen hat, daß ein Mensch vom Strom durchflossen wird. Wenn schon Strom durch einen Verbraucher fließt, und zusätzlich der Mensch in den Stromkreis "eingeschaltet" wird, dann ergibt sich eine Veränderung des fließenden Stromes, nämlich eine Stromerhöhung, und wenn diese Stromveränderung (-erhöhung) in der Größenordnung zwischen 40 bis 250 mA liegt, schaltet die Schaltungsanordnung ab. Natürlich können diese Werte auch geändert werden, wenn Bedarf -z.B. bei bestimmten Anwendungsfällen - besteht, siehe auch weiter oben.

Ein gewisses Problem besteht darin, daß es Verbraucher, also elektrische Geräte gibt, die beim Einschalten einen Strom von 40 bis 250 mA verursachen. In den meisten Fällen aber werden diese elektrischen Geräte beim Einschalten einen Stromstoß aufnehmen, der die obere Schwelle von 250 mA überschreitet. Die Schaltungsanordnung erkennt dabei, daß ein Mensch jedenfalls nicht "zugeschaltet" worden ist.

Für diejenigen Geräte, die beim Einschalten einen derartigen Stromstoß nicht aufnehmen, z.B. Lötkolben und dgl., ist ein Zusatzbauelement vorgesehen, das beim Einschalten einen Stromimpuls aufnimmt.

Als Stromsensor können alle Bauelemente verwendet werden, mit denen Wechsel- oder ggf. Gleichströme oder -Spannungen gemessen werden können, z.B. ohmsche Widerstände, induktive oder kapazitive Meßwertaufnehmer und dgl.

Eine besonders vorteilhafte Ausgestaltung des erfindungsgemäßen Verfahrens ist dem Kennzeichen des Anspruches 3 zu entnehmen. Danach wird das gleichgerichtete Ausgangssignal des Stromsensors nach einer Differenzierung in einem Differenzierglied einer Diskriminatorschaltung zugeführt, deren Fenster durch den unteren und den oberen Schwellwert begrenzt wird.

Dabei besteht die Möglichkeit, vor dem Differenzierschritt das Signal in einem Spitzenwertbildner zu bearbeiten.

Eine Schaltungsanordnung zur Durchführung des erfindungsgemäßen Verfahrens ist dadurch gekennzeichnet, daß als Differenzierglied ein RC-Glied vorgesehen ist, und die Diskriminatorschaltung zwei steuerbare Halbleiterschalter aufweist, von denen der eine steuerbare Halbleiterschalter bei einem Signal des RC-Gliedes oberhalb des oberen Schwellwertes durchgeschaltet wird, so daß die Ausgangsspannung des Differenziergliedes zur Masse abgeleitet wird, und der zweite Halbleiterschalter bei einem signal des RC-Gliedes zwischen dem oberen und unteren Schwellwert angesteuert wird, so daß der Auslöser betatigt wird.

In vorteilhafter Ausgestaltung kann der erste steuerbare Halbleiter ein Tyristor sein, in dessen Gatezuleitung eine Zenerdiode geschaltet ist. Die Einstellung der oberen Schwelle erfolgt dann durch Auswahl der Zenerdiodenspannung.

Es besteht natürlich auch die Möglichkeit, daß der zweite steuerbare Halbleiterschalter ein Transistor ist, dessen Basis mit einem einstellbaren Widerstands-Spannungsteiler ansteuerbar ist.

In bevorzugter Ausführung der Erfindung kann der zweite steuerbare Halbleiterschalter eine Schwellwerttransistorschaltung sein.

Im Normalfall ist der Hin- und Rückleiter ein Phasenleiter und der Mp-Leiter. Natürlich kann auch eine andere Rückleitung vorgesehen werden, beispielsweise ein Schutzleiter oder ein Erdungsleiter.

Natürlich besteht auch die Möglichkeit, das Verfahren mit solchen elektronischen Komponenten durchzuführen, die als an sich bekannt angesehen werden können. Derartige Komponenten sind auf der Basis von Komparator-und/oder Verstärkerschaltungen im wesentlichen z.B. aus DE-Lit. Tietze/Schenk "Halbleiter-Schaltungstechnik" siebente Auflade, Springer-Verlag Berlin Heidelberg New York Tokyo bekannt geworden. Wenn in den Ansprüchen Schutz begehrt wird für die dort beschriebenen Halbleiterbauelemente, dann besagt dies nicht, daß nicht auch solche in der Literaturstelle beschriebenen Bauelemente verwendet werden können, insbesondere weil diese Bauelemente im allgemeinen auch mit einer geringeren Signalwertspannung auskommen. Damit können auch alle Arten von Stromsensoren benutzt werden, auch ohmsche Sensoren.

Weitere vorteilhafte Ausgestaltungen der Erfindung sind den weiteren Unteransprüche zu entnehmen.

Anhand der Zeichnung, in der zwei Ausführungsbeispiele der Erfindung dargestellt ist, soll die Erfindung näher erläutert und beschrieben werden.

Es zeigt:

Figur 1 Eine Schaltungsanordnung zur Durchführung des Verfahrens,

Figur 2 ein Zusatzbauteil in einem Verbraucher und

Figur 3 Spannungs-Zeit- bzw. Strom-Zeit-Kurven unterschiedlicher Betriebsarten,

Figur 4 eine weitere Schaltungsanordnung zur Durchführung des Verfahrens, und

Figur 5 ein Zusatzteil in einem Verbraucher und Lastwechsel (Stromerhöhung im "Fenster"-Bereich)

In einem Netz mit dem Phasenleiter R und dem Mp-Leiter befindet sich ein Verbraucher 10, der mittels eines Schalters 11 zugeschaltet werden kann. In der R-Leitung ist ein als Sensor dienender Übertrager 12 eingeschaltet, dessen Primärwicklung hier in die R-Leitung eingeschleift ist und dessen Sekundärwicklung 13 parallel zu einem Vollwellengleichrichter 14 geschaltet ist, an dessen Ausgangsklemmen 15 und 16 die in der Gesamtheit mit 17 bezeichnete erfindungsgemäße Schaltung angeschlossen ist.

In dieser Schaltungsanordnung 17 befindet sich ein RC-Glied mit einem Widerstand 18 und einem Kondensator 19, deren Reihenschaltung an den Klemmen 15 und 16 angeschlossen ist und als Glättungseinrichtung 20 dient. Parallel zur Glättungseinrichtung 20 bzw. parallel zum Kondensator 19 liegt ein Widerstand 21, an dem die geglättete Sekundärspannung abgenommen wird bzw. abfällt und weiterverarbeitet wird. In Reihe mit dem Widerstand 18 liegt ein Ladekondensator 22, der für die Funktion der Schaltungsanordnung 17 von wesentlicher Bedeutung ist. Hinter dem Ladekondensator 22 ist eine Freilaufdiode 23 vorgesehen, die zusammen mit dem Widerstand 21 der Entladung des Kondensators dient. Parallel zu der Diode 23 ist ein Thyristor 24 geschaltet, dessen Gate mit einem Widerstand 25 und einer Zenerdiode 26 beschaltet ist. Parallel zum Thyristor liegt ein Spannungsteiler aus Widerstand 28 und einstellbarem Widerstand 27.

Das eine Bein des Widerstandes 27 ist einerseits über den Widerstand 28 mit der Anode des Thyristors 24 und andererseits mit der Basis eines Transistors 29 verbunden. Das andere Bein des Widerstandes 27 ist mit dem Emitter eines Transistors 29 verbunden und parallel zur Kollektor-Emitterstrecke des Transistors 29 ist ein weiterer Widerstand 30 geschaltet, wobei das mit dem Emitter verbundene Ende des Widerstandes mit der Basis eines zweiten Transistors 31 zusammengeschaltet ist, vor dessen Kollektor-Emitterstrecke sich ein Relais 32 befindet, welches einen in dem Leitungszug Relais-Kollektor-Emitter des Transistors 31 befindlichen Öffner 34 betätigt. Parallel zu dem Öffner 34 liegt ein mit dem Öffner 34 gekoppelter Taster 33, der nach Betätigen die Schaltungsanordnung aktiviert. In der Kollektorstrecke des Transistors 29 befindet sich ein weiterer Widerstand 35, der an den Pluspol einer Versorgungsspannung 36 angeschlossen ist. Über das Relais 32 wird weiterhin auch der Trennschalter 11 geöffnet.

Der Kondensator 22 bildet mit den Widerständen 28 und 27 und dem Transistor 29 ein Differenzierglied 80 für einen unteren Schwellwert, und mit dem Widerstand 25 der Zenerdiodenschwelle der Zenerdiode 26 und dem Tyristor 24 (Gate-Katoden-Strecke) ein Differenzierglied 60 für einen oberen Schwellwert, wie weiter unten näher erläutert werden soll. Der Widerstand 21 bildet einen Entladewiderstand für den Kondensator 19 bzw. einen Entladewiderstand über die Diode 23 für den Kondensator 22. Da der Kondensator 22 jeweils für das Differenzierglied sowohl für den oberen als auch für den unteren Schwellwert benutzt ist, ist eine exakte Trennung der Differenzierglieder 60 und 80 wie gezeichnet nicht möglich. Die strichlierte Umrahmung soll die Zusammengehörigkeit der jeweiligen Komponenten auch nur andeuten.

Die Wirkungsweise sei nun wie folgt:

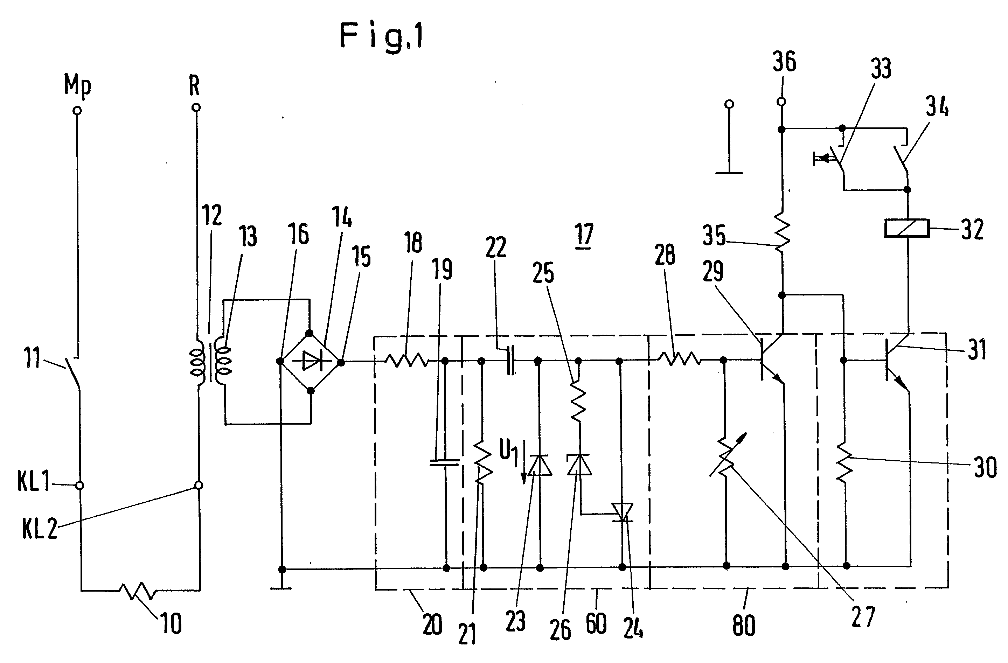

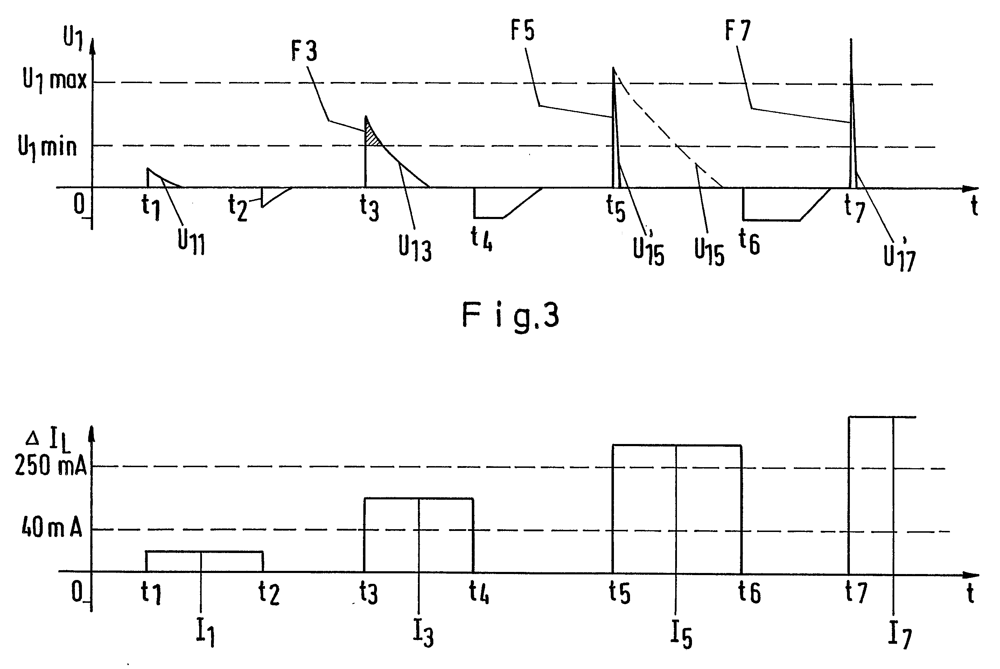

Wenn im Bereich der Klemme $KL_1$ bzw. $KL_2$ ein Mensch an den Phasenleiter R und an den Leiter Mp faßt, dann fließt durch den Menschen hindurch ein Strom, welcher an der Sekundärwicklung 13 ein Sekundärsignal erzeugt, das im Gleichrichter 14 gleichgerichtet und im Glättungsglied bzw. der Glättungseinrichtung 20 geglättet wird. Dieses geglättete Signal ist am Widerstand 21 abzunehmen und es lädt den Kondensator 22 auf. Überschreitet der Ladezustand des Kondensators eine bestimmte Höhe bzw. tritt am Kondensator 22 eine Spannung bestimmter Höhe auf, dann kann die nachfolgende Schaltung auslösen, oder der Thyristor 24 wird durchgeschaltet, d.h. es passiert nichts. Hierzu sei die Figur 3 herangezogen. Man erkennt oben die Spannungs-Zeit-Kurve einiger Fälle, darunter eine Strom-Zeit-Darstellung des Laststromes. Es sei nun angenommen, daß zum Zeitpunkt $t_1$ durch Berühren der beiden Klemmen $KL_1$ und $KL_2$ ein Strom $I_1$ auftritt. Dieser Strom $I_1$ liege unterhalb der unteren Schwelle von 50 mA. Das sekundärseitige Signal $U_1$ (s. Figur 1), das der Aufladung des Kondensators entspricht, hat den Verlauf $U_{11}$ der Figur 1. Es liegt hier unterhalb einer unteren Schwelle $U_1$ minimum; die Schaltungsanordnung löst wegen ihrer Bemessung nicht aus. Der Strom $I_1$ ist auch kleiner als derjenige, der beispielsweise Herzkammerflimmern beim Menschen auslöst.

Zum Zeitpunkt $t_3$ fließe ein Strom $I_3$ durch den menschlichen Körper, der zwischen z.B. 40 mA und 250 mA liegt, der in jedem Fall gefährlich ist und Herzkammerflimmern auslösen kann. Die obere Grenze von 250 mA ist eine empirisch festgestellte Grenze; ein Strom, der größer als 250 mA ist, fließt nicht durch den menschlichen Körper bei 220 V. Aufgrund des Stromes $I_3$ entsteht am Widerstand 28 und 27 eine Spannung $U_{13}$, die mit einer Fläche $F_3$ oberhalb der Spannung $U_1$ min liegt. Diese Fläche $F_3$ bewirkt eine Ansteuerung des Transistors 29, worauf dieser durchschaltet, den Transistor 31 sperrt und auf diese Weise das Relais 32 zum Abfallen bringt, wodurch der Schalter 34 und damit der Trennschalter 11 zur Netzabschaltung geöffnet wird. Die untere Schwelle $U_1$ min wird durch geeignete Einstellung des Widerstandes 27 eingestellt.

Zum Zeitpunkt $t_5$ fließe durch einen elektrischen Verbraucher zwischen den Klemmen $KL_1$ und $KL_2$ ein Strom $I_5$. Dieser Strom $I_5$ bewirkt an dem Widerstand 25 und an der Zenerdiode 26 eine Spannung $U_{15}$, deren Spitze oberhalb eines Wertes $U_{max}$ liegt, so daß eine Spannung vorhanden ist,

die nun die Zenerdiode 26 durchschaltet, wodurch der Thyristor 24 durchgesteuert wird und so ein Durchschalten des Transistors 29 verhindert, wodurch die Spannung $U_{15}$ sofort abfällt entsprechend der Kurve $U'_{15}$ und nicht der Kurve $U''_{15}$ folgt. Der Verlauf $U'_{17}$ zum Zeitpunkt $t_7$ zeigt den Fall eines noch höheren Stromes. Dadurch wird das Auslösen durch die Schaltungsanordnung verhindert. Bei den Ausschalt-Zeitpunkten $t_2$, $t_4$ und $t_6$ erhält man den entsprechenden negativen Verlauf der Spannungen.

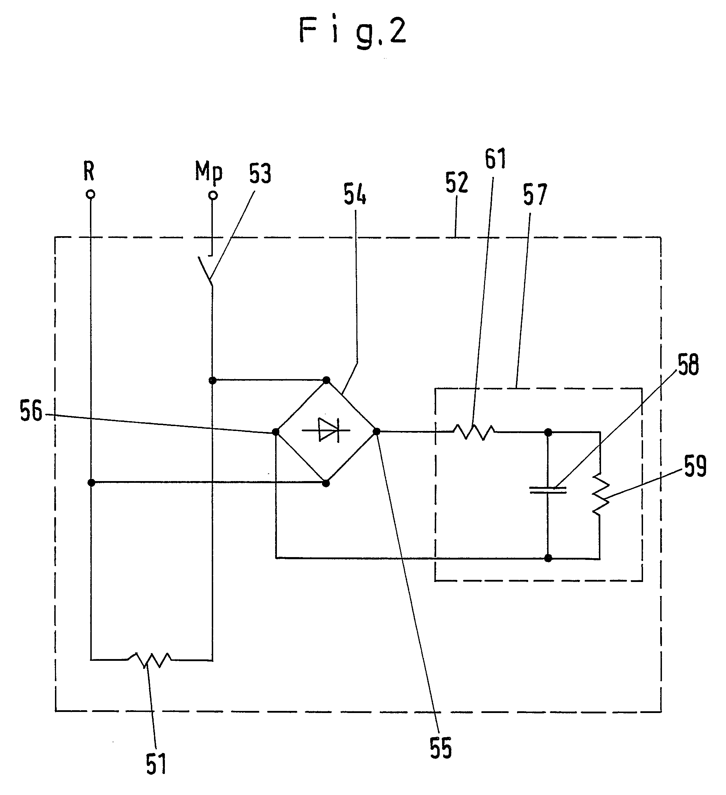

Es ist oben angedeutet worden, daß die Schaltungsanordnung dann auslöst, wenn die Spannung $U_1$ zwischen $U_{1min}$ und $U_{1max}$ liegt. Es gibt natürlich elektrische Geräte, Verbraucher wie z.B. Lötkolben und dgl., welche eine Stromaufnahme haben, die dem Strom $I_3$ entspricht. Bei derartigen Verbrauchern ist eine Zusatzbeschaltung erforderlich, die einen Stromimpuls aufnimmt, der eine Erhöhung der Spannung $U_1$ über den Wert $U_{1max}$ erzeugt. Diese Zusatzbeschaltung kann so ausgestaltet sein wie in Figur 2 dargestellt. Man erkennt die Last 51 innerhalb des Gerätes 52, welche durch einen Geräteschalter 53 an das Netz R-Mp geschaltet wird. Parallel zur Last ist ein Gleichrichter 54 vorgesehen, dessen Ausgangsklemmen 55 und 56 mit einem Impulserzeuger 57 verbunden sind, der einen Kondensator 58, einen parallel dazu befindlichen hochohmigen Widerstand 59 und einen in Reihe mit der Parallelschaltung der beiden Komponenten 58 und 59 und der Klemme 55 des Gleichrichters 54 befindlichen Ladebegrenzungswiderstand 61 aufweist. Wenn der Schalter 53 geschlossen ist, lädt sich der Kondensator 58 impulsartig auf, wodurch eine der Spannungsspitzen $F_5$ oder $F_7$ entsprechende Spannungsspitze erzeugt wird, die die Durchschaltung des Thyristors 24 bewirkt.

Anstatt der Ausführung gemäß der Figur 1, bei der Halbleiterschalter vorgesehen sind, mit denen die beiden Schwellwerte definiert werden, kann auch eine Schaltungsanordnung verwendet werden, bei der im wesentlichen Komparatoren vorgesehen sind.

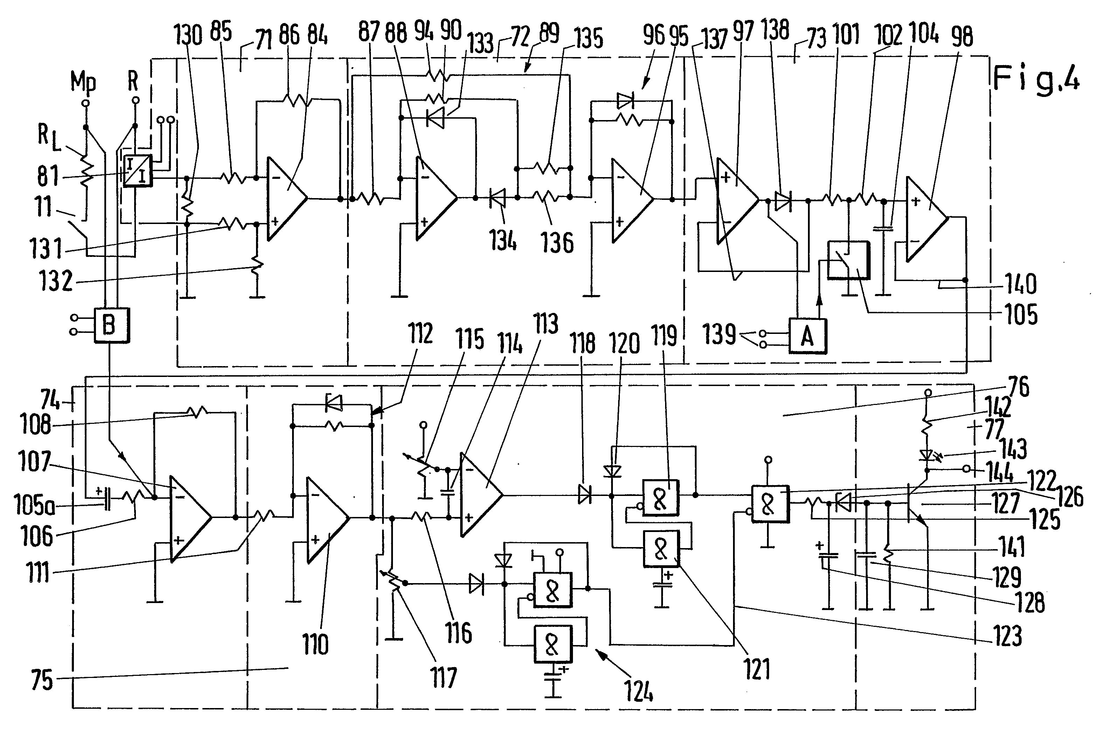

Es sei nun Bezug genommen auf die Figur 4. In dem Netz R-MP befindet sich eine Last, die mit $R_L$ bezeichnet ist. In Reihe zu dieser Last befindet sich der Schalter 11, der zum Abschalten des Stromkreises dient. In dem Leiter, der an die Anschlußklemme R geführt ist, befindet sich ein als Stromwandler ausgebildeter Stromsensor 81; anstatt eines Stromwandlers kann ein ohmscher Widerstand vorgesehen sein. Das Ausgangssignal des Stromwandlers wird einem Eingangsverstärker 71 zugeführt, dessen Ausgangssignal einem Zweiweg-Gleichrichter 72, und dessen Aussgangssignal einem Maximalwertbildner 73. An den Maximalwertbildner schließt sich ein Differenzierverstärker 74 an, dessen Ausgangssignal einem Invertier-Verstärker 75 zugeführt wird. An den Invertier-Verstärker 75 schließt sich ein Diskriminator 76 und daran anschließend eine Ansteuereinheit 77 für den Schalter 11 an. Obwohl alle Komponenten für sich bekannt sind, sollen sie im folgenden näher betrachtet und kurz erläutert werden, insbesondere deshalb, weil sich herausgestellt hat, daß diese Komponenten die Verwendung der Erfindung auch bei bereits fließenden Strömen bis mindestens 16 A gestatten, wobei die Signale, die der Sensor abgibt, im Milliampere-Bereich (ca. 10 mA) liegen.

Der Eingangsverstärker 71 besitzt einen Operationsverstärker 84, dessen Minus-Eingang über einen Vorwiderstand 85 mit dem Sensor 81 verbunden ist; zwischen dem Sensor 81 und dem Widerstand 85 ist ein Widerstand 130 zur Masse geschaltet; zwischen dem Widerstand 130 und der Masse schließt ein Widerstand 131 an, dessen anderes Ende am Plus-Eingang des Operationsverstärkers 84 angeschlossen ist. Zwischen dem Widerstand 131 und dem Plus-Eingang ist ein weiterer Widerstand 132 zur Masse geschaltet. Zwischen dem Ausgang und dem Minus-Eingang befindet sich ein Rückkopplungswiderstand 86.

Das Ausgangssignal des Eingangsverstärkers 71 ist über einen Vorwiderstand 87 dem Minus-Eingang eines zweiten Operationsverstärkers 88, zugeführt, wogegen der Plus-Eingang des Operationsverstärkers 88 auf Masse geschaltet ist. Zwischen dem Minus-Eingang und dem Ausgang des Operationsverstärkers 88 befindet sich eine Rückkopplungsschaltung 89 mit einer ersten Diode 133 und einer weiteren Diode 134; die Diode 134 befindet sich in der Ausgangsleitung des Operationsverstärkers 88 und zwischen dem Ausgang des Operationsverstärkers 88 und der Diode 134 ist die Anode der Diode 133 angeschlossen; an der Anode der Diode 134 schließt der Widerstand 90 an; parallel zu dem Widerstand 87, dem Widerstand 90 und der Parallelschaltung zweier weiterer Widerstände 135 und 136 befindet sich ein weiterer Rückkopplungswiderstand 94, und die hierdurch erzielten Ausgangssignale des Operationsverstärkers 88 werden dem Minus-Eingang eines dritten Operationsverstärkers 95 zugeführt, dessen Plus-Eingang wieder an Masse geschaltet und dessen Ausgang über eine Parallelschaltung einer Diode und einem Widerstand - insgesamt mit der Bezugziffer 96 bezeichnet - mit dem Minus-Eingang gekoppelt ist. Die beiden Operationsverstärker 88 und 95 mit den Beschaltungen bilden einen Zwei-Wege-Gleichrichter 72, dessen Wirkungsweise nicht näher beschrieben werden muß, da sie an sich bekannt ist.

Das Ausgangssignal des Zwei-Wege-Gleichrichters 72 wird dem Spitzenwert- bzw. Maximalwertbildner 73 zugeführt, der ebenfalls zwei Operationsverstärker 97 und 98 aufweist, wobei die Ausgangssignale des Zwei-Wege-Gleichrichters 72 dem Plus-Eingang des Operationsverstärker 97 zugeführt werden; der Minus-Eingang ist an den Ausgang des Operationsverstärker 97 geschaltet, wobei zwischen dem Ausgang und dem Anschluß der Rückkopplung 137 eine Diode 138 geschaltet ist. Zwischen dem Ausgang des Operationsverstärkers 97 und der Anode der Diode 138 ist eine mit A bezeichnete Einrichtung zur Nachführung des Maximalwertbildners bei Lastabschaltung geschaltet, die über zwei Anschlußklemmen 139 mit einer Spannung versorgt wird. Hinter dem Anschluß der Rückkopplungsleitung befindet sich eine Reihenschaltung zweier Widerstände 101 und 102, wobei ein Schalter 105 zwischen Masse und zwischen den beiden Widerständen 101 und 102 geschaltet ist. Die Nachführungseinrichtung A wirkt auf den Schalter 105 ein. Die Reihenschaltung von den beiden Widerständen 101 und 102 ist auf den Plus-Eingang des Operationsverstärkers 98 geschaltet; zwischen diesem Plus-Eingang des Operationsverstärkers 98 und dem Widerstand 102 ist ein Bein eines Kondensators 104 angeschlossen, dessen anderes Bein mit Masse verbunden ist. Die Aufgabe des Schalters 105 ist es, beim Abschalten des Verbrauchers den Kondensator 104 zu entladen.

Die Wirkungsweise des Maximalwertbildners 73 ist an sich bekannt, so daß auch sie nicht näher dargestellt und erläutert werden muß. Die Rückkopplung am Operationsverstärker 98 zwischen Ausgang und Minus-Pol erfolgt über eine Leitung 140.

Der Ausgang des Operationsverstärkers 98 ist über einen Kondensator 105a und einem Widerstand 106 dem Minus-Eingang eines Operationsverstärkers 107 geschaltet, dessen Plus-Eingang an Erde angeschlossen ist und dessen Ausgang über einen Widerstand 108 an den Minus-Eingang rückgekoppelt ist. Diese einzelnen Komponenten bilden zusammen den Differenzierverstärker, der zusätzlich noch über eine Kompensationsschaltung B beeinflußt ist, die einerseits mit den Leitern R und Mp und andererseits mit dem Minus-Eingang des Operationsverstärkers 107 verbunden ist und Netzspannungsschwankungen kompensieren soll.

Der Ausgang des Operationsverstärkers 107 ist über einen Widerstand 111 mit dem Minus-Eingang eines Operationsverstärkers 110 verbunden; der Ausgang des Operationsverstärkers 110 ist über eine Parallelschaltung von einem Widerstand und einer Zenerdiode 112 mit dem Minus-Eingang rückgekoppelt, wogegen der Plus-Eingang an Masse geschaltet ist. Der Operationsverstärker zusammen mit der Rückkopplung 112 und dem Widerstand 111 ist ein Invertier-Verstärker, dessen Wirkungsweise ebenfalls an sich bekannt ist.

Dessen Ausgangsignal wird dem Diskriminator 76 zugeführt, der einen Komparator 113 aufweist, dessen Minus-Eingang über einen Kondensator 114 mit dem Plus-Eingang verbunden ist; zwischen dem Kondensator 114 und dem Minus-Eingang ist ein Potentiometer bzw. ein verstellbarer Widerstand 115 angeschlossen, an dem ein unterer Schwellwert eingestellt werden kann.

Der Ausgang des Operationsverstärkers 110 ist über einen Widerstand 116 dem Plus-Eingang des Operationsverstärkers 113 zugeführt; zwischen dem Anschluß der Rückführung 112 am Ausgang des Operationsverstärkers 110 und dem Widerstand 116 ist ein weiterer verstellbarer Widerstand 117 zur Masse hin geschaltet, an dem der obere Schwellwert eingestellt werden kann.

Im Ausgang des Komparators 113 befindet sich eine Diode 118, die mit einem UND-Glied 119 verbunden ist; über eine Diode 120 ist das UND-Glied rückgekoppelt und zwischen der Diode 118 und dem UND-Glied 119 ist der Eingang eines weiteren UND-Gliedes 121 geschaltet, dessen Ausgang wieder dem UND-Glied 119 zugeführt wird. Dessen Ausgang wird einem weiteren UND-Glied 122 zugeführt, der über eine Leitung 123 das von dem Widerstand 117 herkommende, über eine in gleicher Weise wie die Schaltung mit den Komponenten 118 bis 121 aufgebaute UND-Bildnerschaltung 124 erhält. Das Ausgangssignal des UND-Gliedes 122 wird über einen Widerstand 150, eine Zenerdiode 126 der Basis eines Transistors 127 zugeführt, wobei zwischen dem Widerstand 125 und der Zenerdiode 126 ein Kondensator 128 nach Masse geschaltet ist; der Transistor 127 wird in Kollektor-Emitter-Betrieb geschaltet und parallel zu der Basis-Emitterstrecke ist ein R-C-Glied aus einem Kondensator 129 und einem Widerstand 141 geschaltet. In den Kollektorkreis ist ein Widerstand 142 mit einer Leuchtdiode 143 (für Anzeige) geschaltet; der Kollektor besitzt eine Anschlußklemme 144, mit der ein Relais (nicht näher dargestellt) betätigt werden kann, welches auf den Schalter 11 wirkt, wenn der Transistor in leitende Stellung durchgesteuert wird.

Die Wirkungsweisen sowohl des Diskriminators als auch der Ansteuereinheit sind ebenfalls an sich bekannt und aus diesem Grund nicht näher zu beschreiben.

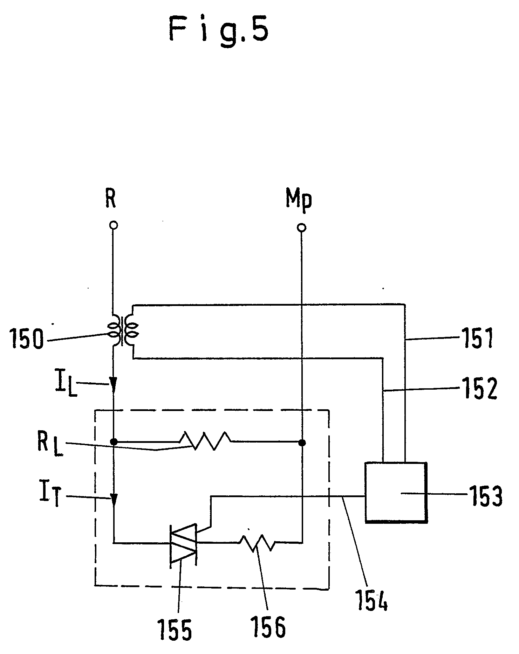

In der Figur 5 ist ein Beispiel dafür angegeben, wie eine Zusatzbeschaltung für ein Gerät mit schwankendem Laststrom ausgebildet sein kann, das normalerweise bei der Schaltungsanordnung nach der Figur 4 zum Ansprechen führt, weil die Laststromerhöhung innerhalb des Bereiches liegen kann, der dem menschlichen Körper zugeordnet ist. Damit die Schaltungsanordnung nach der Figur 4 eindeutig erkennen kann, daß es sich hier um eine nichtmenschliche Last handelt, ist ein Impulsgeber vorgesehen, der in Figur 5 dargestellt ist und wie folgt arbeitet: Im R-Leiter befindet sich ein Stromsensor, beispielsweise in Form eines Stromwandlers 150, wobei sich die Primärwicklung im Netzleiter R befindet. Im Netzleiter fließt der Strom $I_L$, der durch die Last $R_L$ wieder zurück zum Mp-Leiter fließt. Wenn nun vom Stromsensor 150 über die Leiter 151 und 152, die in der Sekundärwicklung des Sensors 150 angeschlossen sind, ein Meßsignal erzeugt wird, dann wird dies der Auswerteschaltung 153 zugeführt, die über eine Leitung 154 mit dem Gate eines Triacs 155 verbunden ist, welcher parallel zur Last $R_L$ geschaltet ist. In Reihe zum Triac 155 ist ein Begrenzungswiderstand 156 geschaltet. Wenn über die Leitung 154 ein Signal an das Gate des Triacs 155 geschaltet wird, dann wird ein Stromimpuls $I_T$ erzeugt, der bei einem Stromanstieg von $I_L$ zwischen 40 und 250 mA der Schaltungsanordnung nach Figur 4 signalisiert, daß hier eine nichtmenschliche Last zugeschaltet ist; hiermit wird dem Abschalten durch die Schaltungsanordnung nach Figur 4 verhindert.

Die Triac-Schaltung, die der Last $R_L$ zugeordnet ist, kann insbesondere bei solchen Geräten eingesetzt werden, bei der die Stromerhöhung bei Laständerungen im Diskriminatorbereich liegen kann, beispielsweise bei einem Videogerät und dgl.

**Ansprüche**

1. Verfahren zur Erfassung eines zwischen einem Hinleiter und einem Rückleiter über den menschlichen Körper fließenden Stromes und zum Abschalten der Netzleiter, dadurch gekennzeichnet, daß das von einem in einem der Netzleiter befindlichen Stromsensor abgegebene Ausgangssignal erfaßt und lediglich bei einem Wert des Stromsensorsignales zwischen einem unteren und einem oberen Schwellwert ein Auslöser zur Abschaltung der Netzleiter betätigt wird.

2. Verfahren nach Anspruch 1, dadurch gekennzeichnet, daß der untere Schwellwert einem Körperstrom entspricht, der gerade noch keine Gefahr für den Menschen bewirkt, wogegen der obere Schwellwert dem bei Netzspannung maximal möglichen Körperstrom durch den Menschen entspricht.

3. Verfahren nach einem der Ansprüche 1 und 2, dadurch gekennzeichnet, daß das gleichgerichtete Ausgangssignal des Stromsensor nach einer Differenzierung in einem Differenzierglied einer Diskriminatorschaltung zugeführt wird, deren Fenster durch den unteren und den oberen Schwellwert begrenzt wird.

4. Verfahren nach Anspruch 3, dadurch gekennzeichnet, daß das gleichgerichtete Ausgangssignal des Stromsensors einem Spitzenwertbildner und danach dem Differenzierglied zugeführt wird.

5. Schaltungsanordnung zur Durchführung des Verfahrens nach Anspruch 3 oder 4, dadurch gekennzeichnet, daß als Differenzierglied ein RC-Glied vorgesehen ist, und daß die Diskriminatorschaltung zwei steuerbare Halbleiterschalter aufweist, von denen der eine steuerbare Halbleiterschalter bei einem Signal des RC-Gliedes oberhalb des oberen Schwellwertes durchgeschaltet wird, so daß die Ausgangsspannung des Differenziergliedes zur Masse abgeleitet wird, und der zweite Halbleiterschalter bei einem Signal des RC-Gliedes zwischen dem oberen und unteren Schwellwert angesteuert wird, so daß der Auslöser betätigt wird.

6. Schaltungsanordnung nach Anspruch 5, dadurch gekennzeichnet, daß der erste steuerbare Halbleiterschalter ein Tyristor ist, in dessen Gatezuleitung eine Zenerdiode geschaltet ist.

7. Schaltungsanordnung nach Anspruch 5, dadurch gekennzeichnet, daß der steuerbare Halbleiterschalter ein Transistor ist, dessen Basis mit einem einstellbaren Widerstands-Spannungsteiler ansteuerbar ist.

8. Schaltungsanordnung nach einem der Ansprüche 5 bis 7, dadurch gekennzeichnet, daß der zweite steuerbare Halbleiterschalter eine Schwellwerttransistorschaltung ist.

9. Schaltungsanordnung zur Durchführung des Verfahrens nach einem der Ansprüche 3 und 4, dadurch gekennzeichnet, daß die einzelnen Komponenten wie Gleichrichter (72), Differenzierer (74), Diskriminatorschaltung (76, 77) durch an sich bekannte Komparator- und/oder Verstärkerschaltungen gebildet sind.

10. Schaltungsanordnung nach Anspruch 9, dadurch gekennzeichnet, daß vor dem als Zweiwegegleichrichter ausgebildeten Gleichrichter (72) ein Eingangsverstärker (70) mit Überspannungs- und Kurzschlußschutz vorgesehen ist.

11. Schaltungsanordnung nach Anspruch 10, dadurch gekennzeichnet, daß vor dem Differenzierer (74) ein Spitzenwertbildner (73) mit Glättung eingeschaltet ist.

12. Schaltungsanordnung nach Anspruch 11, dadurch gekennzeichnet, daß zwischen der Diskriminatorschaltung und der Auswerteschaltung ein Blockbildner (76) zur gesicherten Auswertung des Signales vorgesehen ist.

# Fig.1

EP 0 305 856 A2

# Fig.2

F i g.3

EP 0 305 856 A2

Fig.4

# Fig.5